# EUROPEAN PATENT APPLICATION

(11) **EP 1 926 312 A2**
(43) Date of publication of application: **28.05.2008**
(21) Application number: 07110490.5
(22) Date of filing: 18.06.2007
(51) Int. Cl.: H04N 5/445

(54) **Method and apparatus for displaying menu in cross shape**

(30) Priority: 22.11.2006 KR 20060116066
(71) Applicant: Samsung Electronics Co., Ltd., Suwon-si Gyeonggi-do 443-742 (KR)
(72) Inventor: Bahn, Sahng-hee, Seoul (KR); Cho, Bong-hyun, Jeongja-dong, Bundang-gu, Seongnam-si, Gyeonggi-do (KR); Bae, Hee-jeong, Osan-si, Gyeonggi-do (KR)
(74) Representative: Brandon, Paul Laurence

(57) **Abstract**

A method and apparatus are provided for displaying and operating a menu in a cross manner. The method of displaying a menu includes displaying a group of menu item lists including a plurality of menu items in a cross shape, and performing functions corresponding to the menu items located at an intersection when a selection command is input. Accordingly, a user is provided with a preview showing a result obtained when a menu item is selected. In addition, the user can select a plurality of menu items while previewing the menu items.

## Description

Methods and apparatuses consistent with the present invention relate to a user interface, and more particularly, to displaying and operating a menu in a cross shape.

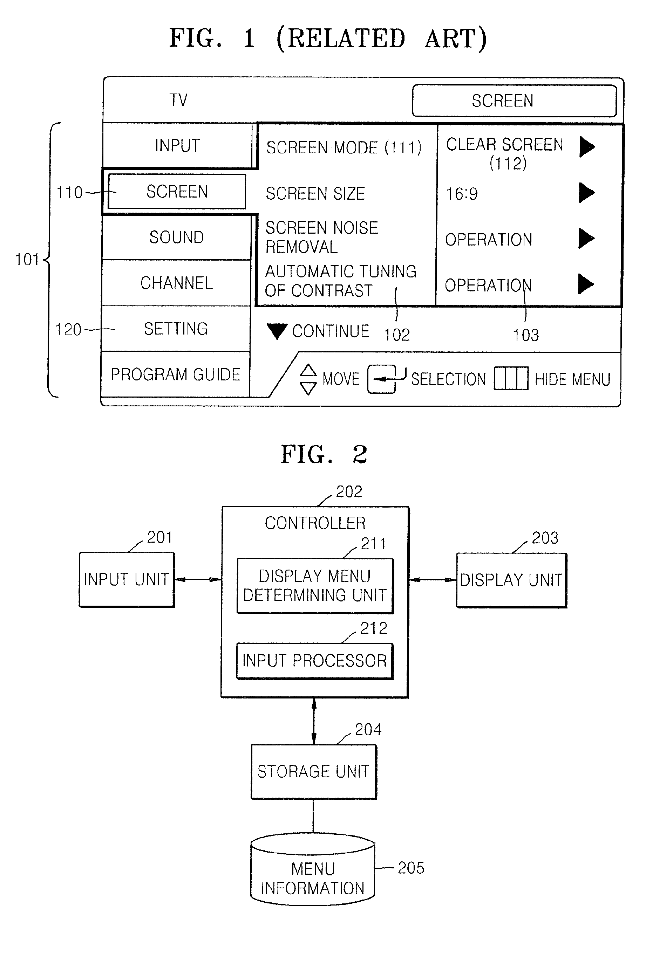

FIG. 1 illustrates an example of a related art menu of a television (TV) on screen display (OSD). The related art menu includes an upper-level menu 101 represented in a text or an icon, a lower-level menu 102 represented in a text or an icon, and a menu item 103 controlling actual settings. Since the related art menu for setting a device generally has a hierarchical structure, in order to move to a menu item controlling desired settings, a screen view has to be changed several times throughout user operations.

In this process, however, the user may not know an exact location of a menu including a setting menu item to be controlled, or may not recognize a menu item that can control settings to be modified. For example, when the user wishes to change a screen mode and to control settings of another device, a 'screen' menu item 110 is first selected from the upper-level menu 101, and a 'screen mode' menu item 111 is then selected from the lower-level menu 102. Thereafter, the screen mode is changed by using a last menu item of a 'clear screen' menu item 112 and is then moved again to the upper-level menu 101 to operate a 'setting' menu item 120. Thus, if the result does not satisfy the user, menu operating has to be repeated. Furthermore, if there is no menu item desired by the user in the lowest-level menu, the menu operation has to be performed until reaching the uppermost-level menu item. In other words, the user cannot know which menu includes a desired function until the menu is directly selected to perform the desired function. In addition, there is no way for the user to know which menu to select to perform a desired function until the menu is directly selected.

Preferred embodiments of the present invention aim to provide a method and apparatus for displaying a menu in which the number of times of performing user operations is minimized, and relevant menus are substantially concurrently provided so that a user can further easily access the menu.

According to an aspect of the present invention, there is provided a method of displaying a menu, comprising: displaying a group of menu item lists including a plurality of menu items in a cross shape; and performing functions corresponding to the menu items located at an intersection when a selection command is input.

In the aforementioned aspect of the present invention, the displaying of a group of menu item lists in a cross shape may further comprise providing a preview showing a result obtained when the menu items located at the intersection are selected.

In addition, the displaying of a group of menu item lists in a cross shape may further comprise providing a preview showing a result to be obtained when the respective menu items are selected.

In addition, the method may further comprise displaying on a background screen a result to be obtained when the menu items located at the intersection are selected.

In addition, the method may further comprise respectively displaying upper-level menu items of the menu item lists.

In addition, the method may further comprise, when a menu change command is input, displaying another group of menu item lists instead of the menu item lists.

In addition, the method may further comprise, when a menu change command is input, displaying another menu item list selected from the menu item lists instead of one menu item list indicated by the menu change command.

In addition, the method may further comprise highlighting a portion corresponding to the menu items located at the intersection.

In addition, the method may further comprise, when an item change command is input, moving a highlight of menu items included in a menu item list arranged in a direction associated with the item change command.

In addition, the menu items included in the menu item lists may be independent from one another. Further, the menu items included in the menu item lists may be used to change functions or settings of a device. Further, the number of the menu item lists may be two.

According another aspect of the present invention, there is provided an apparatus for displaying a menu, comprising a controller having a display menu determining unit which uses menu information stored in a storage unit so as to determine a group of menu item lists containing a plurality of menu items and controls a display unit to display the determined menu item lists in a cross shape, and an input processor which performs functions corresponding to the menu items located at an intersection when a selection command is input through an input unit.

Further features of the present invention are set out in the appended claims.

For a better understanding of the invention, and to show how embodiments of the same may be carried into effect, reference will now be made, by way of example, to the accompanying diagrammatic drawings in which:
FIG. 1 illustrates an example of a related art menu of a TV OSD;
FIG. 2 is a block diagram of an apparatus for displaying a menu according to an exemplary embodiment of the present invention;
FIG. 3 is a flowchart of a method of displaying a menu according to an exemplary embodiment of the present invention;
FIG. 4 illustrates a menu display screen according to an exemplary embodiment of the present invention;
FIG. 5 illustrates a menu display screen according to another exemplary embodiment of the present invention;
FIG. 6 illustrates a screen obtained after a menu change command is performed through the screen of FIG. 5; and
FIG. 7 illustrates a menu display screen according to another exemplary embodiment of the present invention.

Hereinafter, exemplary embodiments of the present invention will be described in detail with reference to the accompanying drawings.

FIG. 2 is a block diagram of an apparatus for displaying a menu according to an exemplary embodiment of the present invention.

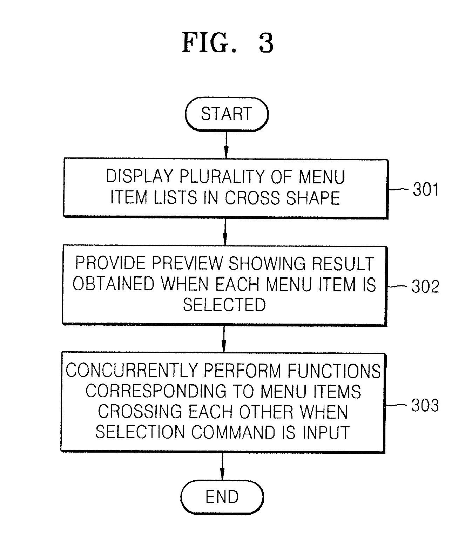

The apparatus includes an input unit 201 which allows a user to select a menu, a display unit 203 which displays a menu screen, a storage unit 204 which stores menu information 205, and a controller 202. The controller 202 includes a display menu determining unit 211 which determines a menu to be displayed by using the menu information 205 and displays the determined menu through the display unit 203, and an input processor 212 which changes a screen in response to a user input and performs a function corresponding to a menu item. Details of these elements will be described later with reference to FIGS. 3 to 7.

FIG. 3 is a flowchart of a method of displaying a menu according to an exemplary embodiment of the present invention. The display menu determining unit 211 uses the menu information 205 to determine and create a plurality of menu items to be displayed and a plurality of menu item lists in which the menu items are gathered to form a plurality of groups. The created menu item lists are displayed in a cross shape (operation 301). The menu item lists do not have to be displayed to perpendicularly cross one another. The storage unit 204 stores the menu information 205 containing usable menu items and their corresponding functions. The menu information 205 includes information on menu item lists, which are formed by grouping menu items. The menu information 205 may be pre-stored in the apparatus when manufactured or may be set or changed by the user. In addition, menu items that are frequently used may be referenced to design the menu information 205.

The menu items are grouped depending on a correlation between the menu items. The menu item lists displayed in a cross shape may include menu items which are substantially independent from one another or horizontally related instead of dependent on one another or vertically related. For example, a first menu item list that includes menu items for selecting a background screen of a mobile phone, and a second menu item list that includes menu items for setting a clock design. are independent from each other in terms of meaning and usage.

The display menu determining unit 211 creates a preview to view the result to be displayed if menu items located at an intersection are selected, so that the user can easily select the menu items. The preview shows a result to be obtained when a menu item is selected. That is, a thumbnail or an icon may be viewed which is displayed by visualizing changes after the menu item is selected. In the aforementioned example, when menu items corresponding to a background screen A of the first menu item list and a clock design B of the second menu item list are located at an intersection, the background screen A and the clock design B are displayed in the form of a thumbnail, and the user can preview the result to be obtained if the background screen A and the clock design B are selected.

In addition to the menu items located at the intersection, a preview showing a result to be obtained when each menu item is selected may also be displayed (operation 302). Data of the preview may be graphic data or video data for visualizing a section result of a menu item. However, the present invention is not limited thereto, and thus data having another format such as audio data may be used. For example, when menu items for selecting a background screen of a game and menu items for selecting a background music of the game are displayed in a cross shape, a thumbnail may be displayed which includes graphic data and audio data to be obtained in the case that the background screen and the background music located at the intersection are selected.

Next, the input processor 212 may change menu items or perform their corresponding functions in response to a user operation through the input unit 201. When a selection command is input, functions corresponding to the menu items located at a current intersection are substantially concurrently performed (operation 303). A thumbnail or an icon corresponding to the menu items located at the intersection may be highlighted to indicate that the menu items can be currently selected. In the aforementioned example, when a specific key of the input unit 201 is pressed to click or select the thumbnail or the icon located at the intersection, screen settings are changed to display a corresponding background screen with corresponding background music. When the user operates a direction key to select another menu item, an item change command is input. When the item change command is input, highlight is moved among menu items included in a menu item list in a direction associated with the item change command. In addition, a preview showing another group of menu item lists is also changed so that a newly highlighted menu item can be viewed.

Although the exemplary embodiment may apply to a menu for changing functions or settings of a device, it is not limited to a menu used for a particular function or usage. In addition, a shift (menu modification) between upper-level items, a shift (item modification) between last menu items, and a menu selection may be carried out in association with a specific input method employing a key operation, touch, or direction keys. For example but not by way of limitation, the number of direction keys may be four.

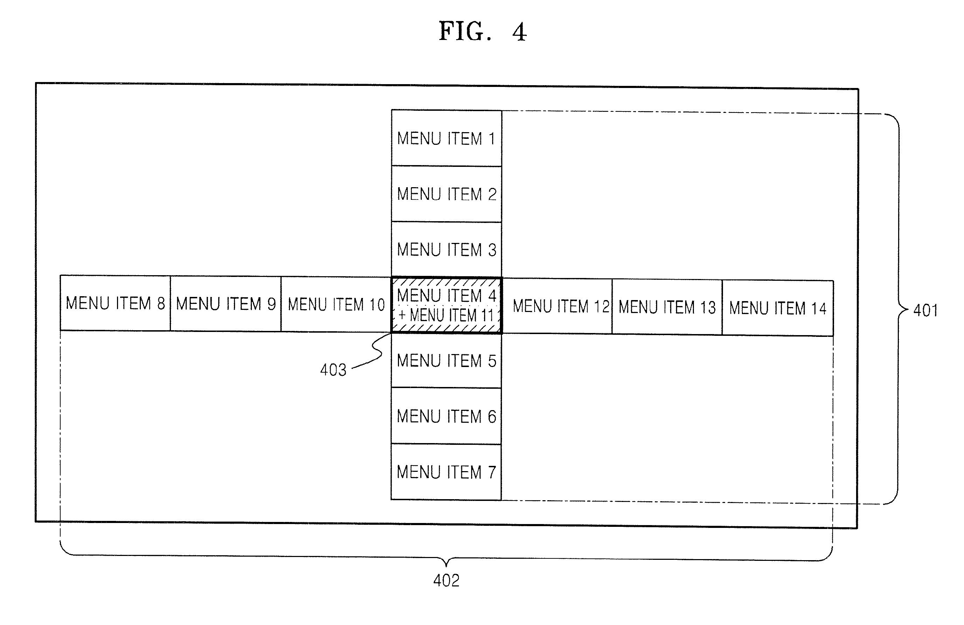

FIG. 4 illustrates a menu display screen according to an exemplary embodiment of the present invention. A first menu item list 401 and a second menu item list 402 substantially perpendicularly cross each other to have a flat menu structure. Menu items 4 and 11 are located at an intersection. A preview 403 is highlighted to indicate information that predicts a result obtained when the two items 4 and 11 are combined or selected. Furthermore, menu items included in the first menu item list 401 may include a preview showing a result obtained when the menu items are selected along with the menu item 11. Likewise, menu items included in the second menu item list 402 may include a preview showing a result obtained when the menu items are viewed along with the menu item 4. When the user performs a selection operation, functions corresponding to the menu items 4 and 11 are carried out.

When the user presses a specific key (e.g., a right direction key), a menu item 12 included in the second menu item list 402 crosses the menu item 4, and its intersection is highlighted. Furthermore, a preview showing the menu items included in the first menu item list 401 is changed to show a result to be obtained when the menu item 12 and the menu item 4 are selected, instead of the menu item 11 and menu item 4. In other words, when a selected item is changed by moving a highlight along the X-axis, a thumbnail for menu items in the Y-axis is changed according to changed menu items in the X-axis. Further, when the selected item is changed by moving a highlight in the Y-axis, a thumbnail for menu items in the X-axis is changed according to changed menu items in the Y-axis.

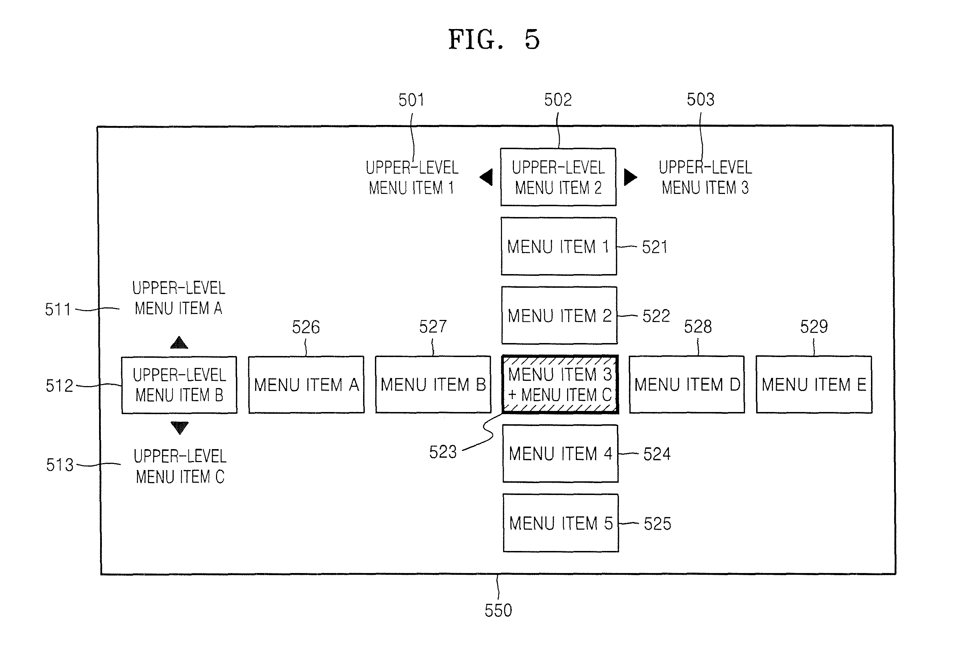

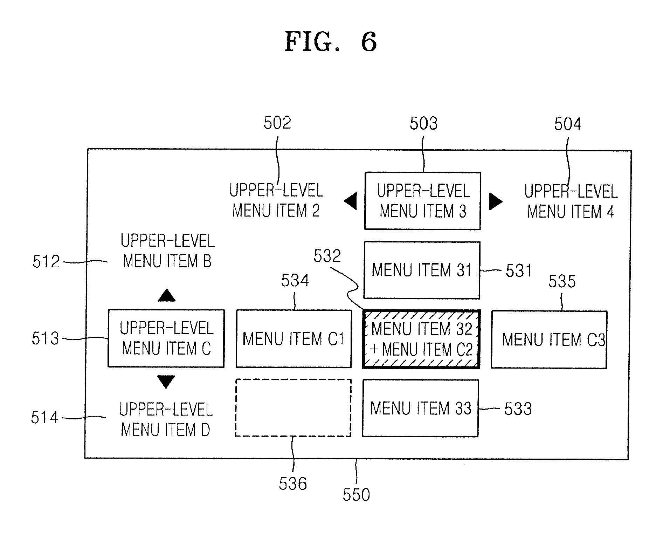

FIG. 5 illustrates a menu display screen according to another exemplary embodiment of the present invention. The menu display screen of FIG. 5 may be an uppermost-level menu of a device, or may be a menu screen selected by using a method. Upper-level menu item_1 to item_3 501 to 503 and upper-level menu item_A to item_C 511 to 513 are arranged. In this case, for a user's convenience, a minimum group of the upper-level menu items may be included. The upper-level menu items related with one another may be arranged to have the substantially same sequential order in each axis. This is because a menu can be simply changed as will be described later with reference to FIG. 6. For example, the upper-level menu item_1 501 and the upper-level menu item_A 511 are the first items of each axis and can be concurrently set or performed.

The upper-level menu item_2 502 and the upper-level menu item_B 512 are currently selected in the exemplary embodiment of FIG. 5. Thumbnails 521 to 525 corresponding to the menu item_1 to item_5 which are lower-level menu items of the upper-level menu item_2 502 and thumbnails 526 to 529 corresponding to the menu item_A to item_E which are lower-level menu items of the upper-level menu item_B 512 are displayed to respectively cross in X-axis and Y-axis. The thumbnail 523 corresponding to the menu item_3 and item_C located at an intersection is highlighted. The user can change menu item lists displayed in a cross shape so as to include the menu item lists in another category by operating a key for only one time (menu modification), or can move a highlight of menu items included in a current menu item list while previewing a result to be obtained when highlighted menu items are selected by operating another key (item modification). In addition, since a background screen 550 includes a screen in association with the menu items 523 currently highlighted, the user can review settings to be changed in advance.

FIG. 6 illustrates a screen obtained after a menu change command is performed through the screen of FIG. 5. When the menu change command is input, another upper-level menu(s) is selected. The upper-level menu item_3 503 and the upper-level menu item_C 513 are selected instead of the upper-level menu item_2 502 and the upper-level menu item_B 512. Last menu items 531 to 535 displayed in a cross shape are lower-level menu items of the upper-level menu items 503 and 513. Accordingly, the user can concurrently change menus along X-axis and Y-axis by operating a key for only one time, so that previous or next menu items relative in terms of sequential order can be displayed. However, according to another exemplary embodiment, a user interface may be provided through which either the upper-level menu items along the X-axis or the upper-level menu items along the Y-axis can be moved. For example, by moving only along the X-axis, the screen of FIG. 6 can be changed to a menu screen in which the upper-level menu item_D 514 and the upper-level menu item_3 503 cross each other.

Besides the X-axis and the Y-axis, another axis may be further provided. For example, Z-axis may be provided so that three menu item lists are displayed in a cross shape. In this case, the user can concurrently select three menu items while previewing a result obtained when the three menu items included in the three menu item lists are all selected. In addition, it is possible to use a user interface in which several pages of a two-dimensional menu screen composed of the X-axis and the Y-axis overlap one another. In this case, the user may first select a desired page and then select a desired menu item. In addition, it is also possible to display previews showing the menu items corresponding to respective four quadrants created by the menu item lists displayed in a cross shape. For example, a thumbnail showing a result, which is to be obtained when a menu item_C1 534 and a menu item_33 533 are all selected, may be displayed in an area 536.

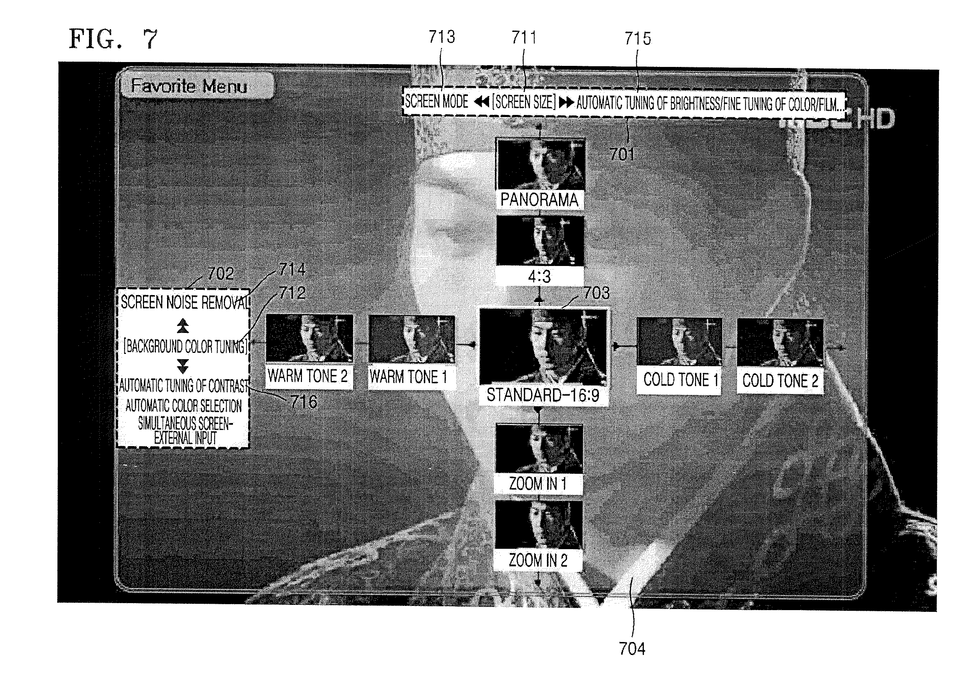

FIG. 7 illustrates a menu display screen according to another exemplary embodiment. Menu items for changing settings of a video data player are arranged according to this exemplary embodiment of the present invention. The menu items arranged in FIG. 7 may be set in the video data player in advance, may be selected by a user, or may be selected from user's favorite menu items.

Referring to FIG. 7, the menu display screen is displayed with an upper-level menu 701 of a first menu item list arranged along the Y-axis, an upper-level menu 702 of a second menu item list arranged along the X-axis, menu items such as a 'panorama' included in a 'screen size' 711 that is a first upper-level menu item and currently selected, and menu items such as 'warm tone 2' included in a 'background color tuning' 712 that is a second upper-level menu item and currently selected. The menu items such as a 'panorama' are arranged along the Y-axis and the menu items such as 'warm tone 2' are arranged along the X-axis. The 'screen size' 711 and the 'background color tuning' 712 are upper-level menu items related with each other and are located at the second position in the upper-level menus. When the user inputs a menu change command, the X-axis and the Y-axis are substantially simultaneously moved so as to select a 'screen mode' 713 and a 'screen noise removal' 714, and their corresponding menu items are displayed in a cross shape. Alternatively, an 'automatic tuning of brightness' 715 and an 'automatic tuning of contrast' 716 are selected so as to display their corresponding menu items in a cross shape.

Furthermore, the respective menu items are represented in a thumbnail form so as to show a state according to their corresponding screen settings. That is, menu items corresponding to 'panorama', '4:3', '16:9', 'zoom in 1', and 'zoom in 2' and displayed on the basis of a 'standard' that is currently selected from the 'background color tuning' 712 are arranged along the Y-axis in thumbnail form. In addition, menu items corresponding to 'warm tone 2', 'warm tone 1', 'standard', 'cold tone 1', and 'cold tone 2' and displayed on the basis of a value of '16:9' currently selected from the 'screen size' 711 are arranged along the X-axis. In a center portion, a menu item 703 is highlighted in a thumbnail form and is displayed in combination of 'standard' and '16:9' crossing each other. A background screen is displayed with a video screen that is currently played back in association with the menu item 703. When the currently highlighted settings satisfy the user, the setting modification ends through the input unit 201.

Accordingly, a user is provided with a preview showing a result obtained when a menu item is selected. Therefore, the user can easily select a menu. In addition, the user can select a plurality of menu items while previewing the menu items. In particular, since the user can select a setting environment to be changed after experiencing the setting environment when device settings are changed, inconvenience in use caused by an erroneous operation of the user may be prevented.

The invention can also be embodied as computer readable codes on a computer readable recording medium.

While the present invention has been particularly shown and described with reference to exemplary embodiments thereof, it will be understood by those skilled in the art that various changes in form and details may be made therein without departing from the spirit and scope of the invention as defined by the appended claims. The exemplary embodiments should be considered in descriptive sense only and not for purposes of limitation. Therefore, the scope of the invention is defined not by the detailed description of the invention but by the appended claims, and all differences within the scope will be construed as being included in the present invention.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A method of displaying a menu, the method comprising:
displaying a group of menu item lists including a plurality of menu items in a cross shape; and
performing at least one function corresponding to the menu items located at an intersection of the cross shape if a selection command is input.

2. The method of claim 1, wherein the displaying of the group of menu item lists in the cross shape further comprises providing a preview showing a result obtained when the menu items located at the intersection are selected.

3. The method of claim 2, wherein the displaying of the group of menu item lists in the cross shape further comprises providing the preview showing the result obtained when the respective menu items are selected.

4. The method of any preceding claim, further comprising displaying on a background screen a result obtained when the menu items located at the intersection are selected.

5. The method of any preceding claim, further comprising respectively displaying upper-level menu items of the menu item lists.

6. The method of any preceding claim, further comprising, if a menu change command is input, displaying another group of menu item lists instead of the group of menu item lists in the cross shape.

7. The method of any preceding claim, further comprising, if a menu change command is input, displaying another menu item list selected from the group of menu item lists, instead of a menu item list indicated by the menu change command.

8. The method of any preceding claim, further comprising highlighting a portion corresponding to the menu items located at the intersection.

9. The method of claim 8, further comprising, if an item change command is input, moving a highlight of menu items included in one of the menu item lists in a direction associated with the item change command.

10. The method of any preceding claim, wherein the menu items included in the menu item lists are substantially independent from one another.

11. The method of any preceding claim, wherein the menu items included in the menu item lists are used to change one of functions and settings of a device.

12. The method of any preceding claim, wherein a number of the menu item lists is two.

13. A computer-readable medium having embodied thereon a computer program comprising a set of instructions configured to execute the method of any preceding claim.

14. An apparatus for displaying a menu, the apparatus comprising a controller (202) which comprises:
a display menu determining unit (211) which uses menu information stored in a storage unit (204) to determine a group of menu item lists containing a plurality of menu items, and controls a display unit (203) that displays the determined menu item lists in a cross shape, and
an input processor (212) which performs functions corresponding to the menu items located at an intersection when a selection command is input through an input unit (201).

15. The apparatus of claim 14, wherein the display menu determining unit (211) provides a preview showing a result obtained when the menu items located at the intersection are selected.

16. The apparatus of claim 15, wherein the display menu determining unit (211) provides the preview showing the result obtained when the respective menu items are selected.

17. The apparatus of any one of claims 14-16, wherein the controller (202) allows a result obtained if the menu items located at the intersection are selected to be displayed on a background screen.

18. The apparatus of any one of claims 14-17, wherein the display menu determining unit (211) displays upper-level menu items of the menu item lists.

19. The apparatus of any one of claims 14-18, wherein, if a menu change command is input, the input processor (212) displays another group of menu item lists instead of the group of menu item lists.

20. The apparatus of any one of claims 14-19, wherein, if a menu change command is input, the input processor (212) displays another menu item list selected from the menu item lists instead of one of the menu item lists indicated by the menu change command.

21. The apparatus of any one of claims 14-20, wherein the display menu determining unit (211) highlights a portion corresponding to the menu items located at the intersection.

22. The apparatus of any one of claims 14-21, wherein, if an item change command is input, the input processor moves a highlight of menu items included in one of the menu item lists in a direction associated with the item change command.

23. The apparatus of any one of claims 14-22, wherein the menu items included in the menu item lists are substantially independent from one another.

24. The apparatus of any one claims 14-23, wherein the menu items included in the menu item lists are used to change at least one of functions and settings of a device.

25. The apparatus of any one of claims 14-24, wherein a number of the menu item lists is two.
